# EUROPEAN PATENT SPECIFICATION

(11) **EP 3 769 529 B1**
(45) Date of publication and mention of the grant of the patent: **17.09.2025**
(21) Application number: 19789384.5
(22) Date of filing: 17.04.2019
(51) Int. Cl.: H04N 19/52, H04N 19/56

(54) **CANDIDATE REORGANIZING WITH ADVANCED CONTROL IN VIDEO CODING**
KANDIDATENREORGANISATION MIT FORTGESCHRITTENER VIDEOCODIERUNG
RÉORGANISATION DE CANDIDATS AVEC COMMANDE AVANCÉE DANS UN CODAGE VIDÉO

(30) Priority: 18.04.2018 US 201862659176 P; 17.05.2018 US 201862672615 P
(43) Date of publication of application: 27.01.2021
(73) Proprietor: MEDIATEK INC., Hsinchu City 30078 (TW)
(72) Inventor: CHEN, Chun-Chia, Hsinchu City 30078 (TW); HSU, Chih-Wei, Hsinchu City 30078 (TW); CHUANG, Tzu-Der, Hsinchu City 30078 (TW); CHEN, Ching-Yeh, Hsinchu City 30078 (TW)
(74) Representative: Hoefer & Partner Patentanwälte mbB
(86) International application number: PCT/CN2019/082979
(87) International publication number: WO 2019/201264

(56) References cited:
- WO-A1-2018/002021
- WO-A1-2018/028559
- CN-A- 102 131 091
- KANG J ET AL: "Description of SDR video coding technology proposal by ETRI and Sejong University", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0013-v3, 11 April 2018 (2018-04-11), XP030151171
- XIU (INTERDIGITAL) X ET AL: "Description of SDR, HDR and 360° video coding technology proposal by InterDigital Communications and Dolby Laboratories", no. m42388, 14 April 2018 (2018-04-14), XP030261692, Retrieved from the Internet <URL:http://phenix.int-evry.fr/mpeg/doc_end_user/documents/122_San%20Diego/wg11/m42388-JVET-J0015-v3-JVET-J0015-v3.zip JVET-J0015-v1.0.docx> [retrieved on 20180414]
- CHEN XU ET AL.: "Decoder-Side Motion Vector Refinement Based on Bilateral Template Matching", JOINT VIDEO EXPLORATION TEAM (JVET)OF ITU-T SG 16 WP 3 AND ISO/IEC JTC 1/SC 29/WG 11, no. JVET-D0029, 1 October 2016 (2016-10-01) - 21 October 2016 (2016-10-21), pages 1 - 3, XP030150254
- KAMP STEFFEN ET AL.: "Decoder-Side Motion Vector Derivation for Block-Based Video Coding", IEEE TRANSACTIONS ON CIRCUITS AND SYSTEMS FOR VIDEO TECHNOLOGY, vol. 22, no. 12, 31 December 2012 (2012-12-31), XP011487149, DOI: 10.1109/TCSVT.2012.2221528

## Description

### FIELD OF THE INVENTION

The present invention relates to video coding using decoder-side motion-vector derivation techniques. In particular, the present invention discloses candidate motion-vector refinement techniques to reduce the required computations and/or improve coding efficiency. More particularly, the present invention relates to a method and an apparatus according to the pre-characterizing parts of the independent claims, respectively. Such method and apparatus are disclosed in document JVET-J0015-v1.

### BACKGROUND AND RELATED ART

Document JVET-J0013-v3 discloses that in the motion refined mode (MRM) at the decoder, bilateral template matching is applied to the first available bi-directional motion vectors (MVs) among the MRM candidates in a priority order. If there are more than one MRM candidates having bi-directional MVs which are not zero MVs, the first available MVs in the given order are chosen to be two initial MVs for bilateral template matching process. If there is no MRM candidate satisfying the condition, zero MVs are used as two initial MVs for bilateral template matching process.

Adaptive block-based Inter/Intra coding has been widely used in various video coding systems such as HEVC (high efficiency video coding). When an Inter mode is used, a block can be predicted by one or more reference blocks. A motion vector (MV) is associated with each reference block in order to identify the reference block. Information related to the motion vector has to be derived at the decoder side in order to derive the reference block. Signalling the motion information may require substantial bandwidth. Various coding techniques have been disclosed to signal the motion information efficiently. Some MV coding techniques are reviewed as follows.

### Merge mode

To increase the coding efficiency of motion vector (MV) coding in HEVC, HEVC has the Skip and Merge modes. Skip and Merge modes obtain the motion information from spatially neighbouring blocks (spatial candidates) or a temporal co-located block (temporal candidate). When a PU is Skip or Merge mode, no motion information is coded. Instead, only the index of the selected candidate is coded. For Skip mode, the residual signal is forced to be zero and not coded. In HEVC, if a particular block is encoded as Skip or Merge, a candidate index is signalled to indicate which candidate among the candidate set is used for merging. Each merged PU reuses the MV, prediction direction, and reference picture index of the selected candidate.

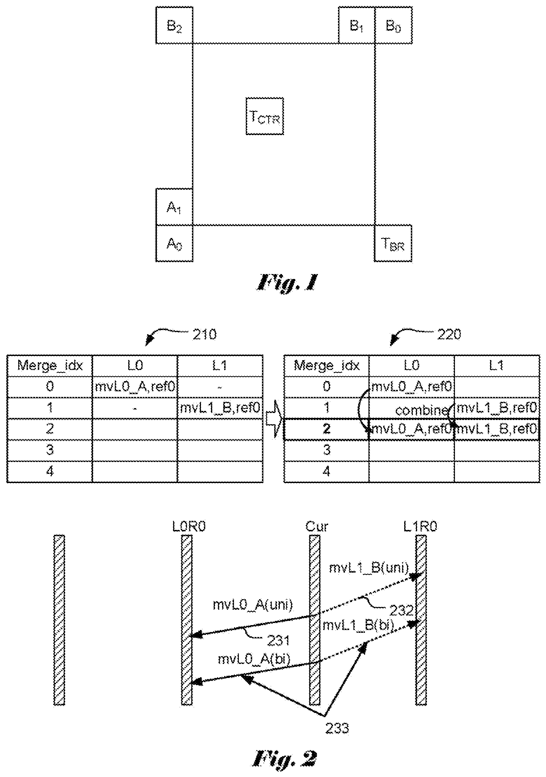

For Merge mode in HEVC reference software HM-4.0, as shown in Fig. 1, up to four spatial MV candidates are derived from A0, A1, B0 and B1, and one temporal MV candidate is derived from TBR or TCTR (TBR is used first, if TBR is not available, TCTR is used instead). Note that if any of the four spatial MV candidates is not available, the position B2 is then used to derive MV candidate as a replacement. After the derivation process of the four spatial MV candidates and one temporal MV candidate, removing redundancy (pruning) is applied to remove redundant MV candidates. If after removing redundancy (pruning), the number of available MV candidates is smaller than 5, three types of additional candidates are derived and are added to the candidate set (i.e., candidate list). The encoder selects one final candidate within the candidate set for Skip, or Merge modes based on the rate-distortion optimization (RDO) decision, and transmits the index to the decoder.

Hereafter, both Skip and Merge modes may be referred as "Merge mode" for convenience. In other words, the "Merge mode" in this disclosure hereafter may mean both Skip and Merge mode.

### Merge mode and AMVP mode

High-Efficiency Video Coding (HEVC) is a new international video coding standard developed by the Joint Collaborative Team on Video Coding (JCT-VC). HEVC is based on the hybrid block-based motion-compensated DCT-like transform coding architecture. The basic unit for compression, termed coding unit (CU), is a 2Nx2N square block, and each CU can be recursively split into four smaller CUs until the predefined minimum size is reached. Each CU contains one or multiple prediction units (PUs).

To achieve the best coding efficiency of hybrid coding architecture in HEVC, there are two kinds of prediction modes (i.e., Intra prediction and Inter prediction) for each PU. For Intra prediction modes, the spatial neighbouring reconstructed pixels can be used to generate the directional predictions. There are up to 35 directions in HEVC. For Inter prediction modes, the temporal reconstructed reference frames can be used to generate motion compensated predictions. There are three different modes, including Skip, Merge and Inter Advanced Motion Vector Prediction (AMVP) modes

When a PU is coded in Inter AMVP mode, motion-compensated prediction is performed with transmitted motion vector differences (MVDs) that can be used together with Motion Vector Predictors (MVPs) for deriving motion vectors (MVs). To decide MVP in Inter AMVP mode, the advanced motion vector prediction (AMVP) scheme is used to select a motion vector predictor among an AMVP candidate set including two spatial MVPs and one temporal MVP. So, in AMVP mode, MVP index for MVP and the corresponding MVDs are required to be encoded and transmitted. In addition, the Inter prediction direction to specify the prediction directions among bi-prediction, and uni-prediction which are list 0 (i.e., L0) and list 1 (i.e., L1), accompanied with the reference frame index for each list should also be encoded and transmitted.

When a PU is coded in either Skip or Merge mode, no motion information is transmitted except for the Merge index of the selected candidate since the Skip and Merge modes utilize motion inference methods. Since the motion vector difference (MVD) is zero for the Skip and Merge modes, the MV for the Skip or Merge coded block is the same as the motion vector predictor (MVP) (i.e., MV=MVP+MVD = MVP). Accordingly, the Skip or Merge coded block obtains the motion information from spatially neighbouring blocks (spatial candidates) or a temporal block (temporal candidate) located in a co-located picture. The co-located picture is the first reference picture in list 0 or list 1, which is signalled in the slice header. In the case of a Skip PU, the residual signal is also omitted. To decide the Merge index for the Skip and Merge modes, the Merge scheme is used to select a motion vector predictor among a Merge candidate set containing four spatial MVPs and one temporal MVP.

Fig. 1 shows the neighbouring PUs used to derive the spatial and temporal MVPs for both AMVP and Merge scheme. In AMVP, the left MVP is the first available one from A₀, A₁, the top MVP is the first available one from B₀, B₁, B₂, and the temporal MVP is the first available one from T_{BR} or T_{CTR}(T_{BR} is used first, if T_{BR} is not available, T_{CTR} is used instead). If the left MVP is not available and the top MVP is not scaled MVP, the second top MVP can be derived if there is a scaled MVP among B₀, B₁, and B₂. The list size of MVPs of AMVP is 2 in HEVC. Therefore, after the derivation process of the two spatial MVPs and one temporal MVP, only the first two MVPs can be included in the MVP list. If after removing redundancy, the number of available MVPs is less than two, zero vector candidates are added to the candidates list.

For Skip and Merge mode, as shown in Fig. 1, up to four spatial Merge index are derived from A₀, A₁, B₀ and B₁, and one temporal Merge index is derived from T_{BR} or T_{CTR}(T_{BR} is used first, if T_{BR} is not available, T_{CTR} is used instead). Note that if any of the four spatial Merge index is not available, the position B₂is then used to derive Merge index as a replacement. After the derivation process of the four spatial Merge index and one temporal Merge index, removing redundancy is applied to remove redundant Merge index. If after removing redundancy, the number of available Merge index is smaller than five, three types of additional candidates are derived and are added to the candidates list.

Additional bi-predictive Merge candidates are created by using original Merge candidates. The additional candidates are divided into three candidate types:
1. Combined bi-predictive Merge candidate (candidate type 1)
2. Scaled bi-predictive Merge candidate (candidate type 2)
3. Zero vector Merge/AMVP candidate (candidate type 3)

In candidate type 1, combined bi-predictive Merge candidates are created by combining original Merge candidate. In particular, two candidates in original candidates, which have mvL0 (the motion vector in list 0) and refIdxL0 (the reference picture index in list 0) or mvL1 (the motion vector in list 1) and refIdxL1 (the reference picture index in list 1), are used to created bi-predictive Merge candidates. Fig. 2 illustrates an example of the derivation process for combined bi-predictive Merge candidate. The candidate set 210 corresponds to an original candidate list, which includes mvL0_A, ref0 (231) in L0 and mvL1_B, ref (232) in L1. A bi-prediction MVP 233 can be formed by combining the candidates in L0 and L1.

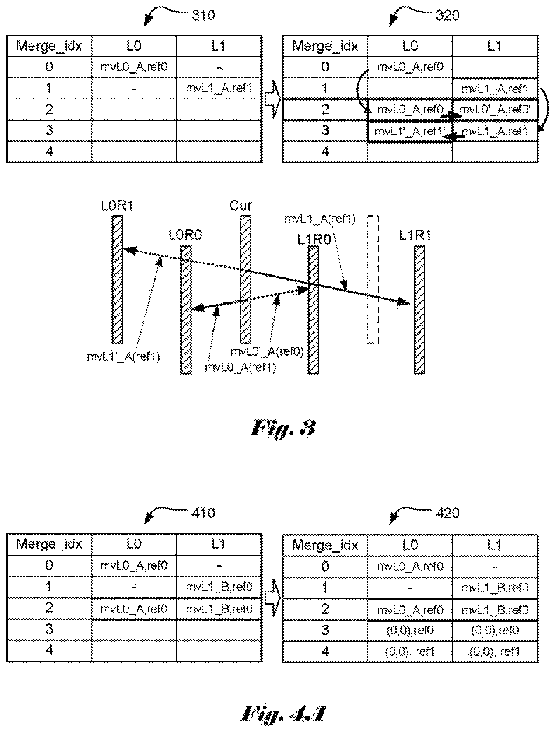

In candidate type 2, scaled bi-predictive Merge candidates are created by scaling original Merge candidate. In particular, one candidate in original candidates, which have mvLX (the motion vector in list X) and refIdxLX (the reference picture index in list X), X can be 0 or 1, is used to created bi-predictive Merge candidates. For example, one candidate A is list 0 uni-predictive with mvL0_A and ref0, ref0 is firstly copied to reference index ref0' in list 1. After that, mvL0'_A is calculated by scaling mvL0_A with ref0 and ref0'. Then, bi-predictive Merge candidate which has mvL0_A and ref0 in list 0 and mvL0'_A and ref0' in list 1, is created and added into Merge candidate list. An example of the derivation process of the scaled bi-predictive Merge candidate is shown in Fig. 3, where candidate list 310 corresponds to an original candidate list and candidate list 320 corresponds to the expanded candidate list including two generated bi-prediction MVPs.

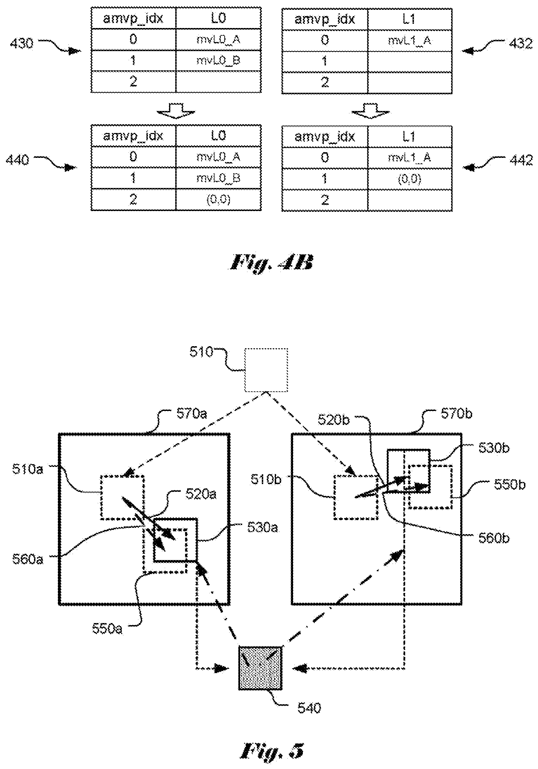

In candidate type 3, Zero vector Merge/AMVP candidates are created by combining zero vectors and reference index which can be referred. Fig. 4A illustrates an example for adding zero vector Merge candidates, where candidate list 410 corresponds to an original Merge candidate list and candidate list 420 corresponds to the extended Merge candidate list by adding zero candidates. Fig. 4B illustrates an example for adding zero vector AMVP candidates, where candidate lists430 (L0) and 432 (L1) correspond to original AMVP candidate lists and the candidate list 440 (L0) and 442 (L1) correspond to the extended AMVP candidate lists by adding zero candidates. If zero vector candidates are not duplicated, it is added to Merge/AMVP candidates list.

### Unified Merge List

In modern codec technique, there are many candidates in Merge/Skip mode extra than HEVC. For example, in document JVET-J0018 ("Description of SDR video coding technology proposal by MediaTek", Joint Video Experts Team (JVET) of ITU-T SG 16 WP 3 and ISO/IEC JTC 1/SC 29/WG 11, 10th Meeting: San Diego, US, 10-20 Apr., 2018), there are many types of Merge candidates in Merge list, such as affine-inherited, affine-corner, spatial, temporal, middle-spatial, and so on.

### Bilateral Template MV Refinement or Decoder-Side MV Refinement (DMVR)

Bilateral Template MV Refinement (BTMVR) is also referred as Decoder-side MV refinement (DMVR) in some literature. For example, in JVET-D0029 (Xu Chen, et al., "Decoder-Side Motion Vector Refinement Based on Bilateral Template Matching", Joint Video Exploration Team (JVET) of ITU-T SG 16 WP 3 and ISO/IEC JTC 1/SC 29/WG 11, 4th Meeting: Chengdu, CN, 15-21 October 2016, Document: JVET- D0029), Decoder-Side Motion Vector Refinement (DMVR) based on bilateral template matching is disclosed. The process of BTMVR is shown in Fig. 5, where block 510 is a current block. Initial motion vectors MV0 520a and MV1 520b for current block 510 are determined. For example, the initial motion vectors may be derived from the Merge candidate. The BTMVR process is applied to a bi-predicted block. In other words, MV0 points to an L0 reference picture 570a and MV1 points to an L1 reference picture 570b. An L0 reference block 530a in L0 reference picture 570a can be located from the corresponding location 510a of the current block in L0 reference picture 570a and MV0 520a. Similarly, an L1 reference block 530b in L1 reference picture 570b can be located from the corresponding location 510b of the current block in L1 reference picture 570b and MV1 520b. A template 540 is generated by using the bi-prediction from the two reference blocks (530a and 530b) pointed by MV0 520a and MV1 520b respectively, as shown in Fig. 5. In one embodiment, the bilateral template 540 is calculated as the average of L0 block 530a and L1 block 530b, but not limited to this embodiment. In the next step, it uses the bilateral template to do integer ME (Motion Estimation) and fractional ME searching around L0 Reference Block in L0 Reference Picture with a search range of P pixel x Q pixel, and finds the location of minimum ME cost. The ME cost has many embodiments, one embodiment is the SAD (Sum of Absolute Difference), but not limited to this embodiment. The final location of minimum ME cost is assigned to a refined MV of L0. Similar step is applied to located a refines MV of L1.For example, using the template as a new current block and perform the motion estimation to find a better matching block (i.e., refined reference block 550a and refined reference block 550b) in L0 reference picture 560a and L1 reference picture 560b, respectively, as shown in Fig. 5. The refined MVs are referred as the MVO' 560a and MV1' 560b, as shown in Fig. 5. Then the refined MVs (MV0' and MV1') are used to generate a final bi-predicted prediction block for the current block.

### PMVD mode or FRUC mode

The PMVD (Pattern-based Motion Vector Derivation) mode, also called PMMVD (Pattern Matched Motion Vector Derivation) or FRUC (Frame-Rate Up-Conversion) mode is a coding tool disclosed in JVET Test Model 3(Joint Video Exploration Team (JVET) of ITU-T SG 16 WP 3 and ISO/IEC JTC 1/SC 29/WG 11: 3rd Meeting: Geneva, CH, 26 May - 1 June 2016, Document Title: Algorithm Description of Joint Exploration Test Model 3 ), which can use an L-shape template or bi-lateral template to refine the MV of Merge mode and save the bits of MVD.

### BRIEF SUMMARY OF THE INVENTION

A method according to the present invention and an apparatus according to the present invention are defined in the independent claims.

A method and apparatus of video coding for a video encoding system or video decoding system are disclosed. According to this method, input data associated with a current block in a current picture are received. One or more initial MVs (motion vectors) for the current block are determined, where said one or more initial MVs are selected from a candidate list and at least one candidate is determined based on motion information of one or more neighbouring blocks of the current block. At least one initial MVs is selectively refined to form at least one refined MVs based on candidate characteristics of said at least one initial MVs. The current block or one or more current MVs of the current block are encoded or decoded using a modified candidate list including said at least one initial MV.

In one example, the candidate characteristics of said at least one initial MV corresponds to candidate position within the candidate list. For example, said at least one initial MV is refined if said at least one initial MV is in latter candidate list. In another embodiment, the candidate characteristics of said at least one initial MV corresponds to association within interleaved candidate groups formed by candidates in the candidate list. For example, said at least one initial MV is refined if said at least one initial MV is in a first interleaved group with even-numbered candidates or a second interleaved group with odd-numbered candidates. In yet another embodiment, the candidate characteristics of said at least one initial MV corresponds to restricted candidates belonging to a candidate group formed by excluding one or more spatial candidates, or one or more selected-type candidates from an original candidate group.

According to another method, one or more initial MVs (motion vectors) are determined for the current block, where said one or more initial MVs from a candidate list and at least one candidate is determined based on motion information of one or more neighbouring blocks of the current block. A target initial MV is refined to form a target refined initial MV by searching 8-connected locations around the target initial MV, where the 8-connected locations correspond to neighbouring locations at 1-pixel distance from the target initial MV in a horizontal direction and/or a vertical direction. The current block or one or more current MVs of the current block are encoded or decoded using a modified candidate list including the target refined initial MV. In one embodiment, if the target initial MV has a fractional pixel value, the target initial MV is refined to an integer pixel value. In another embodiment, the step of refining a target initial MV is iterated by using the target refined MV in a current iteration as the target initial MV in a next iteration.

According to yet another method, a first initial MV (motion vector) and a second initial MV for the current block are determined, where the first MV points to a first initial reference area in a first picture in list L0 and the second MV points to a second initial reference area in a second picture in list L1. The first initial MV and the second initial MV are refined to a refined first MV and a refined second MV respectively according to bilateral search by using a modified first reference area derived from the first initial reference area and a modified second reference area derived from the second initial reference area. The current block or one or more current MVs of the current block are then encoded or decoded using a modified candidate list including a decoder side derived MV corresponding to the first refined MV and the second refined MV.

In one example, the first initial reference area and the second initial reference area correspond to a first reference block and a second reference block respectively, and the modified first reference area and the modified second reference area correspond to partial pixels or sub-sampled pixels of the first reference block and the second reference block respectively. In another embodiment, the first initial reference area and the second initial reference area correspond to a first reference block and a second reference block respectively, and the modified first reference area corresponds to a first extended region of the first reference block and the modified second reference area correspond to a second extended region of the second reference block. In yet another embodiment, a bilateral template is derived based on the modified first reference area and the modified second reference area, and wherein the bilateral search uses a sum of absolute differences (SAD) as a cost criterion between the bilateral template and a first candidate refined reference area around the first initial reference area to derive the refined first MV, and the bilateral search uses the SAD as the cost criterion between the bilateral template and a second candidate refined reference area around the second initial reference area to derive the refined second MV.

According to yet another method, one or more initial MVs (motion vectors) are determined for the current block, where said one or more initial MVs from a candidate list and at least one candidate is determined based on motion information of one or more neighbouring blocks of the current block. A target initial MV is refined to form a target refined initial MV by searching multiple locations within a search window, wherein a search range of the search window is adaptively determined. The current block or one or more current MVs of the current block are encoded or decoded using a modified candidate list including the target refined initial MV.

In one example, the search range of the search window is adaptively determined according to block size of the current block. In another embodiment, the search range of the search window is adaptively determined according to a candidate type of the target initial MV.

### BRIEF DESCRIPTION OF THE DRAWINGS

Fig. 1 shows the neighbouring PUs used to derive the spatial and temporal MVPs for both AMVP and Merge scheme.
Fig. 2 illustrates an example of the derivation process for combined bi-predictive Merge candidate.
Fig. 3 illustrates an example of the derivation process of the scaled bi-predictive Merge candidate, where candidate list on the left corresponds to an original candidate list and the candidate list on the right corresponds to the expanded candidate list including two generated bi-prediction MVPs.
Fig. 4A illustrates an example of adding zero vector Merge candidates, where the candidate list on the left corresponds to an original Merge candidate list and the candidate list on the right corresponds to the extended Merge candidate list by adding zero candidates.
Fig. 4B illustrates an example for adding zero vector AMVP candidates, where the candidate lists on the top correspond to original AMVP candidate lists (L0 on the left and L1 on the right) and the candidate lists at the bottom correspond to the extended AMVP candidate lists (L0 on the left and L1 on the right) by adding zero candidates.
Fig. 5 illustrates an example of Bilateral Template MV Refinement (i.e., Decoder-Side Motion Vector Refinement (DMVR)) process.
Fig. 6 illustrates a flowchart of an exemplary coding system with selectively refining an initial MV based on candidate characteristics of the initial MV according to an embodiment of the present invention.
Fig. 7 illustrates a flowchart of an exemplary coding system with by searching 8-connected locations around an initial MV according to an embodiment of the present invention.
Fig. 8 illustrates a flowchart of an exemplary coding system by using bilateral search based a modified first reference area in an L0 picture and a modified second reference area in an L1 pictureto refine an initial L0 MV and initial L1 MV according to an embodiment of the present invention.
Fig. 9 illustrates a flowchart of an exemplary coding system by using an adaptive search window according to an embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims. Unless otherwise specified, the following embodiments are meant as illustrative examples, which do not fall under the scope of the claims.

In invention disclosed hereafter, the PMVD mode is not restricted to the specific PMVD as described in the previous JVET documents, any Inter mode tool that using pattern-based refinement as a type of PMVD is also considered as PMVD or FRUC mode. There are many different types of PMVD or FRUC. In one embodiment, PMVD sends a PMVD Merge index to indicate which Merge candidate is selected for MV refinement, where the decoder must try all Merge candidates to find best starting MV according to the original PMVD. In another embodiment, PMVD disable the sub-CU refinement for template mode PMVD, but still allowing the bi-lateral mode of PMVD. In the present invention, various improvements for PMVD are disclosed. In particular, the present invention discloses various candidate refinement techniques as follows.

### General "Prediction + Index" Algorithm Framework

The present invention can be cast into a framework including two parts of process. First part is related to a candidate list (or a set) of predictors by inheriting neighbouring information, or refining or processing neighbouring information. Second part is to send one or more indexes (e.g. Merge index or AMVP index) to indicate the candidate of a neighbour block in the candidate list is selected for inheritance. The candidates in this document is defined as the candidates of a general "prediction + index" algorithm framework. In some cases, the second part is to send some side information related to the index. The side information may be MVD (MV difference) or some other information. The side information may be optional for some embodiments. If a fixed candidate in the list is always chosen, the index may not need to be sent.

The Merge/Skip mode and AMVP mode belongs to the "prediction + index" framework. Other coding tools can be used with this framework. For example, it may combine two or more candidates into one candidate. In another example, the original candidate may be used as an original MV predictor and motion estimation searching uses current block pixels to find a final MVD (Motion Vector Difference). In this example, the side information is the MVD. In another example, the original candidate may be used as an original MV predictor and motion estimation searching uses current block pixels to find a final MVD for L0. For L1 predictor, the L1 predictor can use the original candidate. In yet another example, the original candidate can be used as an original MV predictor and motion estimation searching uses current block pixels to find a final MVD for L1while L0 predictor is the original candidate. In yet another example, the original candidate can be the original MV predictor and MV refinement searching uses top or left neighbouring pixels as searching template to find a final predictor. In yet another example, the original candidate can be used as the original MV predictor and MV refinement searching uses bi-lateral template (e.g. pixels in L0 and L1 reference pictures pointed by a candidate MV or mirrored MV) as searching template to find a final predictor.

In this document, the term "candidate" may mean the Merge/Skip candidate, the AMVP candidate, and the general "prediction + index" algorithm framework. The "prediction + index" algorithm framework is not restricted in the examples mentioned above.

In order to improve the coding efficiency, a method named as Candidate Reorganizing is disclosed. Candidate reorganizing comprises two processing parts: one is Candidate Refinement, and the other is Candidate Reorder. The Candidate Reorder is briefly described as follows.

The Candidate Reorder rearrange the candidate order inside the candidate list to achieve better coding efficiency. The reorder rule depends on some pre-calculation for current candidates, such as upper neighbour condition (e.g. modesor MVs) or left neighbour condition (e.g. modesor MVs) of the current CU, current CU shape, or up/left L-shape template matching, or bi-directional template.

### Candidate Refinement

The Candidate Refinement process refines the MVs of candidates. It selects some candidates first, and then for a target candidate, it uses some information to refine the MVs of the current candidate. The information used for refinement includes upper neighbour condition (e.g. modesor MVs) or left neighbour condition (e.g. modesor MVs) of the current CU, current CU shape, or up/left L-shape template matching, or bi-directional template.

Some embodiments of candidate selection are list below.
- It only selects one candidate in the candidate list. The position of the selected candidate can be the first candidate, the second candidate, or other fixed position in the candidate list.
- It only selects one candidate in the candidate list. The position of the selected candidate can be signalled in bit-stream header or coded in sequence level, picture level, slice level, or CU level.
- It selects N candidates in the candidate list, where N is an integer. The positions of the selected candidates can be pre-defined positions in the candidate list. In another embodiment, the positions of the selected candidates can be signalled in bit-stream header or coded in sequence level, picture level, slice level, or CU level. In another embodiment, the positions of the selected candidates can be constrained to have an index smaller than or equal to a threshold, THD.
- It selects one or more candidates in the candidate list.

### Refinement Process of Selected Candidates

The information for refinement includes upper neighbour condition (e.g. modes or MVs) or left neighbour condition (e.g. modes or MVs) of the current CU, current CU shape, or up/left L-shape template matching, or bi-directional template. In one embodiment, the decoder calculates the MV refinement, the calculating rule must match between encoder and decoder. In another embodiment, the decoder does not need to calculate the MV refinement. Instead, the encoder calculates the MV refinement and signals the refined MV to the decoder. In this embodiment, the encoder can insert new candidates with a fixed refined MV step, such as MVX±1, MVY±1 into the candidate list and sends the index of the selected candidate to the decoder. Alternatively, the encoder can judge the search range or the number of search steps, and signal to the decoder to help reducing decoder complexity. Other methods for the encoder to pre-calculate part of the refinement and send signal to the decoder to help saving decoder runtime can be also used.

In the following, some embodiments of candidate refinement are disclosed for the case of L-shape template matching and bi-directional template.

### Embodiment : Candidate Refinement Based on L-shape template matching

The L-shape template consists of surrounding L-shape pixels. The surrounding L-shape pixels are the left and/or top neighbouring pixels of current CU (denoted as current L-shape) and the left and/or top neighbouring pixels of reference CU (denoted as reference L-shape).

It some template matching methods use matching criterion such as SAD (Sum of Absolute Differences) or SSD (Sum of Squared Differences) between reference L-shape and current L-shape to refine the MVs of the current candidate. The refinement process searches for multiple refined MVs of the current candidate, computes the corresponding template matching results, and uses the final value based on the template matching results of different refined MVs of the current candidate as the refined MV. The refined MV may have a fractional MV part. In this case, the bilinear or N-tap interpolation may be needed for deriving the pixel values at fractional pixels for the current and reference L-shapes.

### Embodiment : Candidate Refinement Based on Bi-Directional Template

According to this embodiment, bidirectional pixels are used for the template matching. For example, the bidirectional template is used as the bidirectional candidate. For a current candidate, the L0 MV reference block and the L1 MV reference block are the bi-template.

Regardless of the information used for refinement (e.g. L-shape template, bi-directional template, or other information), the process of searching refined MVs can always use a WxHsearch window (W:search window width, H: search window height). The search range based refinement requires large amount of computation. Therefore, to simplify the computation overhead, techniques to reduce the computations for MV refinement searching are discloses as follows.

### Embodiment : Integer-Pixel Based Template

In this embodiment, there is no bilinear or N-tap interpolation for the reference template. Although the refined MV resulted from refinement searching may have a fractional part, this embodiment can treat the refined MV as an integer MV to retrieve the reference L-shape or retrieve the bi-directional template or other information for refinement. The fractional MV may be converted to an integer MV by rounding the MV to a nearest integer MV. In this embodiment, the MV refinement is an integer-MV based approach. Therefore, the refinement difference (e.g. MV difference to refine the original MV) is also an integer MV. In another embodiment, it refines the original MV to become an integer MV where the original MV may have a fractional part. This embodiment can be applied to L-shape template or bi-directional template

### Embodiment : 1-D of Searching Pattern (Horizontal Direction Only)

In this embodiment, instead of a WxHsearch window, the proposed refinement only refines the MV in the horizontal direction. In this embodiment, the MV refinement can be integer MV based, where the refinement difference is an integer MV or the MV is refined to an integer MV. The original MV may have a fractional part.

### Embodiment : 1-D of Searching Pattern (Vertical Direction Only)

In this embodiment, instead of a WxHsearch window, the proposed refinement only refines the MV in the vertical direction. In this embodiment, the MV refinement can be integer-MV based, where the refinement difference is an integer MV or the MV is refined to an integer MV. The original MV may have a fractional part.

### Embodiment : Only 1-D Of Searching Pattern (Mixed Horizontal and Vertical Direction)

In this embodiment, instead of a WxHsearch window, the proposed refinement only refines the MV in the horizontal direction for some candidates, but only refines in the vertical direction for other candidates. In this embodiment, the MV refinement can be integer-MV based, where the refinement difference is an integer MV or the MV is refined to an integer MV. The original MV may have a fractional part.

### Embodiment : Simple Search Pattern I

In this embodiment, instead of a WxHsearch window, the proposed refinement only has a very simple refinement pattern, such as 4-connected pattern (i.e., (MVx-1,MVy), (MVx+1,MVy), (MVx,MVy-1), and (MVx,MVy+1)) with only 1-pixel difference of refinement. In another example, the very simple refinement pattern corresponds to 8-connected pattern(i.e.,
(MVx-1,MVy-1),(MVx-1,MVy),(MVx-1,MVy+1),(MVx,MVy-1),(MVx,MVy+1),(MVx+1,MVy-1),(MVx+1, MVy), and (MVx+1,MVy+1)) with only 1-pixel difference of refinement.. In this embodiment, the MV refinement can be integer-MV based, where the refinement difference is an integer MV or the MV is refined to an integer MV. The original MV may have a fractional part.

### Embodiment : Simple Search Pattern II

In this embodiment, instead of a WxHsearch window , the proposed refinement only have a very simple refinement pattern, such as Top-Bottom (i.e., (MVx,MVy-1), and (MVx,MVy+1)), or Left-Right (i.e., (MVx-1,MVy), and (MVx+1,MVy)) with only 1-pixel difference of refinement. In this embodiment, the MV refinement can be integer-MV based, where the refinement difference is an integer MV or the MV is refined to an integer MV. The original MV may have a fractional part.

### Embodiment : 2-Step Searching

In this embodiment, instead of a WxHsearch window , the proposed refinement can use two steps of refinement. In step 1, it only refines in the horizontal direction. After finding the best refined MV in the horizontal direction, it only refines in the vertical direction.

In another embodiment, in step 1, it only refines in the vertical direction. After finding the best refined MV in the vertical direction, it only refines in the horizontal direction.

In this embodiment, the MV refinement can be integer-MV based, where the refinement difference is an integer MV or the MV is refined to an integer MV. The original MV may have a fractional part.

### Embodiment : Adaptive Search Range

In this embodiment, instead of a fixed WxHsearch window in the conventional candidate refinement, the proposed refinement can use an adaptive search range. The search range of different candidate can be adaptively selected according to CU size, picture size, candidate type or other information. In another embodiment, the search range can have M types (M is an integer greater than or equal to 1) and M can be signalled from the encoder to the decoder.

In another embodiment, the search range for different candidate can be adaptive according to the diversity of corner spatial neighbouring MVs. For example, if the MV difference of left-bottom corner spatial neighbouring and top-right corner spatial neighbouring is high (e.g. higher than a pre-defined threshold), the search range is adjusted to be higher. In another example, if the MV difference of left-bottom corner spatial neighbouring and top-right corner spatial neighbouring is low (e.g. lower than a pre-defined threshold), the search range is adjusted to be lower.

### Embodiment : On-Off Control of Refinement

In this embodiment, instead of refining every CU, the refinement is turned off when the current CU is larger than a pre-defined threshold. In another embodiment, the refinement is turned off when the current CU is smaller than a pre-defined threshold.

The above embodiments focus on reducing the computational overhead for refinement searching range. Embodiments related to the improvement of template structure are also disclosed. Embodiments related to the improvement of L-shape template and the bi-directional template are disclosed as follows

### Adaptive Template for L-shape Template Matching

The L-shape template composes of surrounding L-shape pixels. The surrounding L-shape pixels are the left and/or top neighbouring pixels of the current CU (denoted as current L-shape) and the left and/or top neighbouring pixels of reference CU (denoted as reference L-shape). The candidate refinement can be based on the L-shape template matching to refine the MV at the encoder and/or decoder side. Some techniques to improve the candidate refinement based on L-shape template are disclosed as follows.

### Embodiment : Integer Pixels of Template

Instead of using bi-linear interpolation or N-tap interpolation for left and/or top neighbouring pixels of reference CU to retrieve the pixel values at fractional pixels for MV with a fractional part, the integer part of MV can be used to get the integer pixels of L-shape template of reference CU without any bi-linear interpolation or N-tap interpolation. In another embodiment, the MV having a fractional part is rounded to a nearest integer MV to retrieve the integer pixels of L-shape template of reference CU without any bi-linear interpolation or N-tap interpolation.

### Embodiment : Only Top Part of L-shape

A conventional L-shape template always consists of top neighbouring pixels and left neighbouring pixels. However, according to this embodiment, the template can use only top neighbouring pixels as the template for the current CU and the reference CU to save the memory bandwidth.

### Embodiment : Only Left Part of L-shape

A conventional L-shape template always consists of top neighbouring pixels and left neighbouring pixels. However, according to this embodiment, the template can use only left neighbouring pixels as the template for the current CU and the reference CU to save the memory bandwidth.

### Embodiment : Adaptive Use Top or Left Part

A conventional L-shape template always consists of top neighbouring pixels and left neighbouring pixels. However, according to this embodiment, the template can adaptively only use the top neighbouring pixels or only use left neighbouring pixels. In an embodiment, the template uses only top neighbouring pixels for the CU with the width greater than (or greater than or equal to) the height. In another embodiment, it can decide to use only left neighbouring pixels for the CU with width smaller than (or smaller that or equal to) height. In another embodiment, the template can adaptively uses top neighbouring pixels for some CUs and use left neighbouring pixels for other CUs.

### Embodiment : Adaptive Thickness of Template

For the L-shape template, an adaptive thickness mode is disclosed. The thickness is defined as the number of pixel rows in the top part of the L-shape template or the number of pixel columns in the left part of the L-shape template. The adaptive thickness mode changes the top thickness or left thickness depending on some conditions, such as the current PU size or current PU shape (width or height) or QP (quantization parameter) of current slice. For example, the top thickness can be equal to 2 if the current PU height is greater than or equal to 32, and the top thickness can be equal to 1 if the current PU height is smaller than or equal to 32.

### Embodiment : Sub-Sampling of Template

In this embodiment, it sub-samples the L-shape template. In other words, it drops some pixels for top part and/or left part of the L-shape template in a sub-sampling manner. For the 2:1 sub-sampling, for example, it may horizontally sub-sample the top part of L-shape template, such as dropping pixels of odd horizontal positions or even horizontal positions in top part of L-shape template.

### Adaptive Template for Bi-Directional Template MV Refinement

In this section, embodiments on adaptive template related to bi-directional template MV refinement are described as follow.

For a current candidate, the L0 MV reference block and the L1 MV reference block are used for the bi-directional template derivation. In one embodiment, the template is derived by averaging L0 MV reference block and L1 MV reference block. Motion estimation is performed in L0 reference picture around L0 MV reference CU using the template to refine the L0 MV. Motion estimation may be further performed in L1 reference picture around L1 MV reference CU using the template to refine the L1 MV. The derivation process is done at both the encoder side and the decoder side.

In one embodiment of MV refinement, the L0 MV is mirrored to L1, and L0 MV is refined to find best match between L0 MV reference block and mirrored L1 MV reference block. In another way, the L1 MV is mirrored to L0, and L1 MV is refined to find best match between L1 MV reference block and Mirrored L0 MV reference block.

Techniques to improve the performance or reduce the computations of bi-directional template MV refinement are described as follows.

### Embodiment : Integer Pixels of Template

In the bi-directional template, instead of applying bi-linear interpolation or N-tap interpolation for L0 (or L1) MV reference block pixels of reference CU to retrieve the pixels values at fractional pixels for MV with a fractional part, the integer part of MV is used to get the integer pixels of reference CU without any bi-linear interpolation or N-tap interpolation. In another embodiment, the MV is rounded to a nearest integer MV and is used to retrieve the integer pixels of reference CU without any bi-linear interpolation or N-tap interpolation.

### Embodiment : Sub-Sampling

The bi-directional template can be sub-sampled for the refinement process.

### Embodiment : Using Partial Pixels on Template

Partial pixels of the bi-directional template can be used for the refinement process. For example, the top half pixels of bi-directional template can be used for the refinement process.

### Combination of MV Refinement and Candidate Reorder

### Candidate Reorder

Candidate reorder is intended for achieving better coding efficiency by reordering the candidate order in the candidate list. The reorder rule depends on some pre-calculation for current candidates, such as upper neighbour condition (e.g. modes or MVs) or left neighbour condition (e.g. modes or MVs) of the current CU, current CU shape, or up/left L-shape template matching. Some candidates are selected for reordering and the cost of those candidates are pre-calculated. The cost is named as the guessing-cost of the candidate and the lower the cost means the better the candidate. Finally, the selected candidates are reordered according to the pre-calculated cost by placing the lowest cost candidate in the front of the list.

Some embodiments of combination of MV candidate refinement and candidate reorder are described as follows.

### Embodiment : Reorder Then Refinement

In this embodiment, the candidate reorder is applied before candidate refinement. In this case, the candidate refinement can select candidates of high matching cost for refinement, where the matching cost is stored during candidate reorder process.

### Embodiment : Refinement Then Reorder

In this embodiment, candidate refinement is applied before candidate reorder.

### Embodiment : Matching Result Sharing Between Reorder and Refinement

In this embodiment, the template data can be reused between MV candidate refinement and candidate reorder. For example, the L-shape template matching result of candidate reorder can be stored and shared by MV candidate refinement. In another example, the L-shape template matching result of MV candidate refinement can be stored and shared by candidate reorder.

### Embodiment : Adaptive Selection of Reorder or Refinement

In this embodiment, it adaptively applies candidate refinement or candidate reorder according one or more conditions in the current CU. For example, if the number of "certain candidate type" candidates in the current CU candidate list is smaller than a threshold, candidate refinement is selected. Otherwise, candidate reorder is selected. In another example, if the number of "certain candidate type" candidates in the current CU candidate list is smaller than a threshold, candidate refinement is selected. Otherwise, candidate reorder is selected. In yet another example, if "certain candidate type" candidates in the current CU candidate list have similar MVs among them, candidate refinement is selected. Otherwise, candidate reorder is selected.

### Embodiment : Mixed Result of Reorder and Refinement

In this embodiment, the candidate refinement and candidate reorder are applied jointly. The process selects N candidates to calculate the reorder costs, and selects M candidates to calculate the refinement searching costs. Each refinement searching cost corresponds to the cost at a searched position. The N candidates for reorder can be reordered. However, some of them (e.g. N2, N2<N) can be replaced by the refined candidates (i.e., refined result from M candidates for refinement).

For example, a method according to an embodiment of the present invention can choose 5 spatial candidates in Merge list (denoted S0, S1, S2, S3, S4) for reordering, and choose one (e.g. S0) for refinement. Then, positions in the Merge list of S0, S1, S2, S3, and S4 can be reordered, and then a candidate (e.g. S4) can be replaced by refined SO result.

The foregoing proposed method can be implemented in encoders and/or decoders. For example, the proposed method can be implemented in an Inter prediction module and/or Intra prediction module of an encoder, and/or an Inter prediction module (and/or Intra prediction module) of a decoder

### Candidate Refinement for Latter Candidates

In this method, the candidate refinement can means DMVR, PMVD-template-based, PMVD-bilateral based, Merge refinement

The key idea of this method is to perform candidate refinement for latter candidates in the candidate list and not to refine for front candidate (e.g. candidates 0 and 1 in the candidate list). The latter candidates refer to candidates that are closer to the end of the candidate list. This method is applicable for general "prediction + index" algorithm framework. For example, for candidate refinement, only the lattercandidates can be refined, while the front candidate (e.g. candidates 0 and 1 in the candidate list)will not be refined.

In one embodiment, a threshold THD can be pre-defined. If the candidate has an index equal to or smaller than the pre-defined threshold, the candidate will not be refined. If the candidate has an index larger than the threshold, the candidate will not be refined.

In another embodiment, the process can firstly remove one or more candidates with index equal to or smaller than the pre-defined threshold. The remaining candidates then form a new candidate list for the candidate refinement function (such as DMVR, or PMVD-template-based, or PMVD-bilateral based, or Merge refinement)

In another embodiment, a threshold is pre-defined, the candidates with index equal to or smaller than the pre-defined threshold will not be refined. For the candidate shaving index larger than the threshold, the process compares the similarity of the motion information of the current candidate with the candidates having index equal to or smaller than the threshold. If the similarity is high (i.e., very similar), the current candidate will not be refined.

In another embodiment, the process can firstly remove the candidates with index equal to or smaller than the pre-defined threshold and also remove some candidates with index larger than the threshold and with high similarity of motion information. The remaining candidates are then used to form the new candidate list for the candidate refinement.

### Candidate Refinement for Interleaved Candidates

The basic idea of the claimed invention is to perform candidate refinement for candidates in an interleaved order. The interleaved order corresponds to odd order (i.e.m, candidate order 1, 3, 5, 7,...) or even order(i.e., candidate order 0, 2, 4, 6,....). In one embodiment, the even order candidates (i.e., candidate 0, 2, 4, 6,....) can be refined while the odd candidates(i.e., candidate 1, 3, 5, 7,...)are not refined. In another example, which does not fall under the scope of the claims, only candidates with index (K*I + M) are refined, where K and M are predefined integers, and is an integer greater than or equal to 0. In another example, which does not fall under the scope of the claims, candidates with index (K*I + M) are not refined where K and M are predefined integers, and I is an integer greater than or equal to 0.

In the case of interleaved rule for refining candidates, the non-refined candidates can be excluded and the remaining candidates form a new candidate list for candidate refinement.

### Excluding Spatial Candidate or Some Candidate Type for Candidate Refinement

According to this method, some candidate types can be selected for refinement and other candidate types will not refined. For example, the spatial candidates will always not be refined.

In another embodiment, it can exclude some candidate types and form a new candidate list for candidate refinement. For example, it can exclude the spatial candidates and form a new candidate list for candidate refinement.

The foregoing proposed method can be implemented in the encoders and/or the decoders. For example, the proposed method can be implemented in an Inter prediction module in an encoder, and/or an Inter prediction module in a decoder

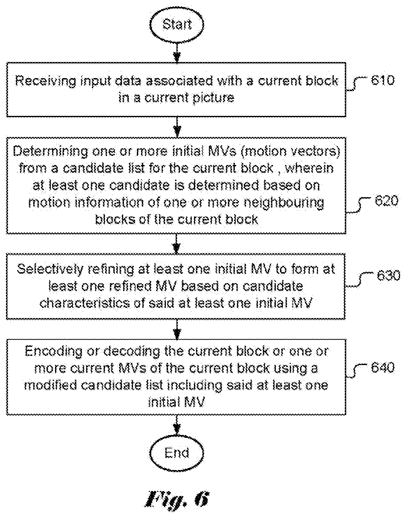

Fig. 6 illustrates a flowchart of an exemplary coding system with selectively refining an initial MV based on candidate characteristics of the initial MV according to an embodiment of the present invention. The steps shown in the flowchart, as well as other following flowcharts in this disclosure, may be implemented as program codes executable on one or more processors (e.g., one or more CPUs) at the encoder side and/or the decoder side. The steps shown in the flowchart may also be implemented based hardware such as one or more electronic devices or processors arranged to perform the steps in the flowchart. According to this method, input data associated with a current block in a current picture are received in step 610.One or more initial MVs (motion vectors) for the current block is determined from a candidate list in step 620, where at least one candidate is determined based on motion information of one or more neighbouring blocks of the current block. At least one initial MV is selectively refining to form at least one refined MV based on candidate characteristics of said at least one initial MV in step 630. The current block or one or more current MVs of the current block is encoded or decoded using a modified candidate list including said at least one initial MV in step 640.

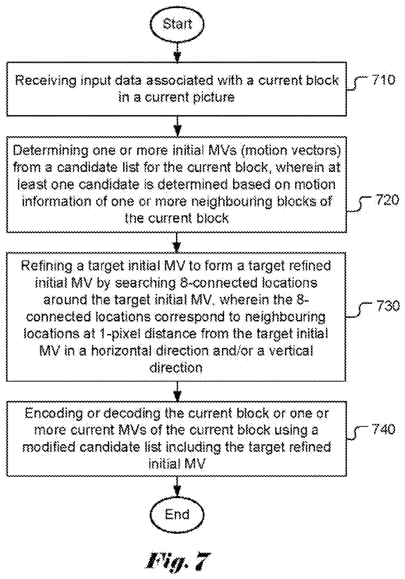

Fig. 7 illustrates a flowchart of an exemplary coding system with by searching 8-connected locations around an initial MV according to an embodiment of the present invention. According to this method, input data associated with a current block in a current picture are received in step 710. One or more initial MVs (motion vectors) for the current block is determined from a candidate list in step 720, where at least one candidate is determined based on motion information of one or more neighbouring blocks of the current block. A target initial MV is refined to form a target refined initial MV by searching 8-connected locations around the target initial MV in step 730, where the 8-connected locations correspond to neighbouring locations at 1-pixel distance from the target initial MV in a horizontal direction and/or a vertical direction. The current block or one or more current MVs of the current block is encoded or decoded using a modified candidate list including the target refined initial MV in step 740.

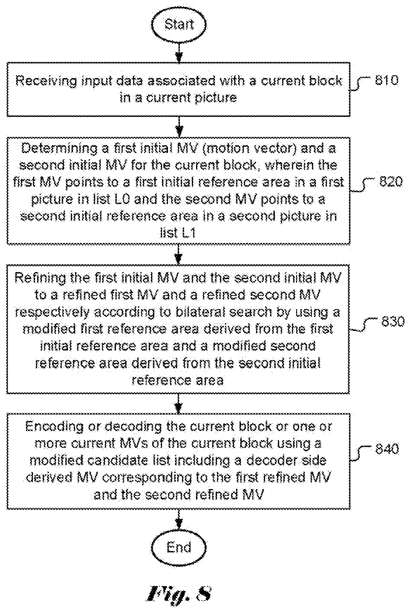

Fig. 8 illustrates a flowchart of an exemplary coding system by using bilateral search based a modified first reference area in an L0 picture and a modified second reference area in an L1 picture to refine an initial L0 MV and initial L1 MV according to an embodiment of the present invention. According to this method, input data associated with a current block in a current picture are received in step 810.A first initial MV (motion vector) and a second initial MV for the current block are determined in step 820, wherein the first MV points to a first initial reference area in a first picture in list L0 and the second MV points to a second initial reference area in a second picture in list L1.. The first initial MV and the second initial MV are refined to a refined first MV and a refined second MV respectively according to bilateral search by using a modified first reference area derived from the first initial reference area and a modified second reference area derived from the second initial reference area in step 830. The current block or one or more current MVs of the current block are encoded or decoded using a modified candidate list including a decoder side derived MV corresponding to the first refined MV and the second refined MV in step 840.

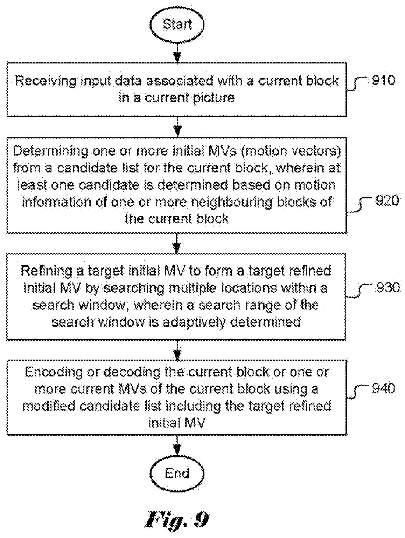

Fig. 9 illustrates a flowchart of an exemplary coding system by using an adaptive search window according to an embodiment of the present invention. According to this method, input data associated with a current block in a current picture are received in step 910. One or more initial MVs (motion vectors) for the current block is determined from a candidate list in step 920, where at least one candidate is determined based on motion information of one or more neighbouring blocks of the current block. A target initial MV is refined to form a target refined initial MV by searching multiple locations within a search window, where a search range of the search window is adaptively determined in step 930, where the 8-connected locations correspond to neighbouring locations at 1-pixel distance from the target initial MV in a horizontal direction and/or a vertical direction. The current block or one or more current MVs of the current block is encoded or decoded using a modified candidate list including the target refined initial MV in step 940.

The flowcharts shown are intended to illustrate an example of video coding according to the present invention. In the disclosure, specific syntax and semantics have been used to illustrate examples to implement embodiments of the present invention.

The above description is presented to enable a person of ordinary skill in the art to practice the present invention as provided in the context of a particular application and its requirement. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be one or more circuit circuits integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the scope of the invention.

The invention may be embodied in other specific forms without departing from its essential characteristics. The described examples are to be considered in all respects only as illustrative and not restrictive. The scope of the invention is therefore, indicated by the appended claims rather than by the foregoing description.

## Claims

1. A method of video coding, the method comprising:
receiving (610) input data associated with a current block in a current picture;
determining (620) one or more initial motion vectors, MVs, from a candidate list for the current block, wherein at least one candidate is determined based on motion information of one or more neighbouring blocks of the current block;
selecting at least one initial MV based on candidate characteristics of said at least one initial MV, and refining (630) said at least one initial MV to form at least one refined MV; and
encoding or decoding (640) the current block or one or more current MVs of the current block using a modified candidate list including said at least one refined MV;
**characterized in that**
the candidate characteristics of said at least one initial MV corresponds to association within interleaved candidate groups formed by candidates in the candidate list,
wherein each candidate of said candidate list is numbered in such a way that an index of the respective candidate is equal to an integer number representing a position of the respective candidate in said candidate list minus one,
wherein the interleaved candidate groups comprise a first interleaved group with even-numbered candidates and a second interleaved group with odd-numbered candidates, and
wherein said at least one initial candidate comprises all MVs belonging to the first interleaved group, and no MV belonging to the second interleaved group is refined, or
wherein said at least one initial candidate comprises all MVs belonging to the second interleaved group, and no MV belonging to the first interleaved group is refined.

2. An apparatus of video coding, the apparatus comprising one or more electronic circuits or processors arranged to:
receive input data associated with a current block in a current picture;
determine one or more initial motion vectors, MVs, from a candidate list for the current block, wherein at least one candidate is determined based on motion information of one or more neighbouring blocks of the current block;
select at least one initial MV based on candidate characteristics of said at least one initial MV, and refine said at least one initial MV to form at least one refined MV; and
encode or decode the current block or one or more current MVs of the current block using a modified candidate list including said at least one refined MV;
**characterized in that**
the candidate characteristics of said at least one initial MV corresponds to association within interleaved candidate groups formed by candidates in the candidate list,
wherein each candidate of said candidate list is numbered in such a way that an index of the respective candidate is equal to an integer number representing a position of the respective candidate in said candidate list minus one,
wherein the interleaved candidate groups comprise a first interleaved group with even-numbered candidates and a second interleaved group with odd-numbered candidates, and
wherein said at least one initial candidate comprises all MVs belonging to the first interleaved group, and no MV belonging to the second interleaved group is refined, or
wherein said at least one initial candidate comprises all MVs belonging to the second interleaved group, and no MV belonging to the first interleaved group is refined.

## Patentansprüche

1. Verfahren zur Videocodierung, wobei das Verfahren Folgendes umfasst:
Empfangen (610) von Eingangsdaten, die einem aktuellen Block in einem aktuellen Bild zugeordnet sind;
Bestimmen (620) eines oder mehrerer anfänglicher Bewegungsvektoren, MVs, aus einer Kandidatenliste für den aktuellen Block, wobei mindestens ein Kandidat basierend auf Bewegungsinformationen eines oder mehrerer benachbarter Blöcke des aktuellen Blocks bestimmt wird;
Auswählen mindestens eines anfänglichen MV basierend auf Kandidateneigenschaften des mindestens einen anfänglichen MV und Verfeinern (630) des mindestens einen anfänglichen MV, um mindestens einen verfeinerten MV zu bilden; und
Codieren oder Decodieren (640) des aktuellen Blocks oder eines oder mehrerer aktueller MVs des aktuellen Blocks unter Verwendung einer modifizierten Kandidatenliste, die den mindestens einen verfeinerten MV enthält;
**dadurch gekennzeichnet, dass**
die Kandidateneigenschaften des mindestens einen anfänglichen MV zu einer Zuordnung innerhalb verschachtelter Kandidatengruppen korrespondieren, die durch Kandidaten in der Kandidatenliste gebildet werden,
wobei jeder Kandidat der Kandidatenliste derart nummeriert ist, dass ein Index des jeweiligen Kandidaten gleich einer ganzen Zahl ist, die eine Position des jeweiligen Kandidaten in der Kandidatenliste minus eins repräsentiert,
wobei die verschachtelten Kandidatengruppen eine erste verschachtelte Gruppe mit geradzahligen Kandidaten und eine zweite verschachtelte Gruppe mit ungeradzahligen Kandidaten umfassen, und
wobei der mindestens eine anfängliche Kandidat alle MVs umfasst, die zu der ersten verschachtelten Gruppe gehören, und kein MV, der zu der zweiten verschachtelten Gruppe gehört, verfeinert wird, oder
wobei der mindestens eine anfängliche Kandidat alle MVs umfasst, die zu der zweiten verschachtelten Gruppe gehören, und kein MV, der zu der ersten verschachtelten Gruppe gehört, verfeinert wird.

2. Vorrichtung zur Videocodierung, wobei die Vorrichtung eine oder mehrere elektronische Schaltungen oder Prozessoren umfasst, die zu Folgendem ausgelegt sind:
Empfangen von Eingangsdaten, die einem aktuellen Block in einem aktuellen Bild zugeordnet sind;
Bestimmen eines oder mehrerer anfänglicher Bewegungsvektoren, MVs, aus einer Kandidatenliste für den aktuellen Block, wobei mindestens ein Kandidat basierend auf Bewegungsinformationen eines oder mehrerer benachbarter Blöcke des aktuellen Blocks bestimmt wird;
Auswählen mindestens eines anfänglichen MV basierend auf Kandidateneigenschaften des mindestens einen anfänglichen MV und Verfeinern des mindestens einen anfänglichen MV, um mindestens einen verfeinerten MV zu bilden; und
Codieren oder Decodieren des aktuellen Blocks oder eines oder mehrerer aktueller MVs des aktuellen Blocks unter Verwendung einer modifizierten Kandidatenliste, die den mindestens einen verfeinerten MV enthält;
**dadurch gekennzeichnet, dass**
die Kandidateneigenschaften des mindestens einen anfänglichen MV zu einer Zuordnung innerhalb verschachtelter Kandidatengruppen korrespondieren, die durch Kandidaten in der Kandidatenliste gebildet werden,
wobei jeder Kandidat der Kandidatenliste derart nummeriert ist, dass ein Index des jeweiligen Kandidaten gleich einer ganzen Zahl ist, die eine Position des jeweiligen Kandidaten in der Kandidatenliste minus eins repräsentiert,
wobei die verschachtelten Kandidatengruppen eine erste verschachtelte Gruppe mit geradzahligen Kandidaten und eine zweite verschachtelte Gruppe mit ungeradzahligen Kandidaten umfassen, und
wobei der mindestens eine anfängliche Kandidat alle MVs umfasst, die zu der ersten verschachtelten Gruppe gehören, und kein MV, der zu der zweiten verschachtelten Gruppe gehört, verfeinert wird, oder
wobei der mindestens eine anfängliche Kandidat alle MVs umfasst, die zu der zweiten verschachtelten Gruppe gehören, und kein MV, der zu der ersten verschachtelten Gruppe gehört, verfeinert wird.

## Revendications

1. Procédé de codage vidéo, le procédé comprenant :
la réception (610) de données d'entrée associées à un bloc courant dans une image courante ;
la détermination (620) d'un ou plusieurs vecteurs de mouvement, MV, initiaux à partir d'une liste de candidats pour le bloc courant, dans lequel au moins un candidat est déterminé sur la base d'informations de mouvement d'un ou plusieurs blocs voisins du bloc courant ;
la sélection d'au moins un MV initial sur la base de caractéristiques de candidat dudit au moins un MV initial, et l'affinage (630) dudit au moins un MV initial pour former au moins un MV affiné ; et
le codage ou le décodage (640) du bloc courant ou d'un ou plusieurs MV courants du bloc courant à l'aide d'une liste de candidats modifiée incluant ledit au moins un MV affiné ;
**caractérisé en ce que**
les caractéristiques de candidat dudit au moins un MV initial correspondent à une association à l'intérieur de groupes de candidats entrelacés formés par des candidats dans la liste de candidats,
dans lequel chaque candidat de ladite liste de candidats est numéroté de telle manière qu'un indice du candidat respectif est égal à un nombre entier représentant une position du candidat respectif dans ladite liste de candidats moins un,
dans lequel les groupes de candidats entrelacés comprennent un premier groupe entrelacé avec des candidats numérotés pairs et un second groupe entrelacé avec des candidats numérotés impairs, et
dans lequel ledit au moins un candidat initial comprend tous les MV appartenant au premier groupe entrelacé, et aucun MV appartenant au second groupe entrelacé n'est affiné, ou
dans lequel ledit au moins un candidat initial comprend tous les MV appartenant au second groupe entrelacé, et aucun MV appartenant au premier groupe entrelacé n'est affiné.

2. Appareil de codage vidéo, l'appareil comprenant un ou plusieurs circuits ou processeurs électroniques agencés pour :
recevoir des données d'entrée associées à un bloc courant dans une image courante ;
déterminer un ou plusieurs vecteurs de mouvement, MV, initiaux à partir d'une liste de candidats pour le bloc courant, dans lequel au moins un candidat est déterminé sur la base d'informations de mouvement d'un ou plusieurs blocs voisins du bloc courant ;
sélectionner au moins un MV initial sur la base de caractéristiques de candidat dudit au moins un MV initial, et affiner ledit au moins un MV initial pour former au moins un MV affiné; et
coder ou décoder le bloc courant ou un ou plusieurs MV courants du bloc courant à l'aide d'une liste de candidats modifiée incluant ledit au moins un MV affiné ;
**caractérisé en ce que**
les caractéristiques de candidat dudit au moins un MV initial correspondent à une association à l'intérieur de groupes de candidats entrelacés formés par des candidats dans la liste de candidats,
dans lequel chaque candidat de ladite liste de candidats est numéroté de telle manière qu'un indice du candidat respectif est égal à un nombre entier représentant une position du candidat respectif dans ladite liste de candidats moins un,
dans lequel les groupes de candidats entrelacés comprennent un premier groupe entrelacé avec des candidats numérotés pairs et un second groupe entrelacé avec des candidats numérotés impairs, et
dans lequel ledit au moins un candidat initial comprend tous les MV appartenant au premier groupe entrelacé, et aucun MV appartenant au second groupe entrelacé n'est affiné, ou
dans lequel ledit au moins un candidat initial comprend tous les MV appartenant au second groupe entrelacé, et aucun MV appartenant au premier groupe entrelacé n'est affiné.
